# FASCICULE DE BREVET EUROPEEN

(11) **EP 0 767 881 B1**
(45) Date de publication et mention de la délivrance du brevet: **22.09.1999**
(21) Numéro de dépôt: 95924995.4
(22) Date de dépôt: 28.06.1995
(51) Int. Cl.: F16L 9/22, E02B 9/06

(54) **CONDUITE DE CIRCULATION DE FLUIDE**
FLÜSSIGKEITSROHR
FLUID CIRCULATION PIPE

(30) Priorité: 29.06.1994 FR 9408030
(43) Date de publication de la demande: 16.04.1997
(73) Titulaire: SOCIETE CIVILE DE BREVETS MATIERE, 15000 Aurillac (FR)
(72) Inventeur: MATIERE, Marcel, F-15000 Aurillac (FR)
(74) Mandataire: Le Brusque, Maurice
(86) Numéro de dépôt international: FR9500868
(87) Numéro de publication internationale: WO9600867

(56) Documents cités:
- EP-A- 0 392 912
- FR-A- 935 451
- FR-A- 2 599 783
- GB-A- 2 174 472
- US-A- 2 702 564

## Description

L'invention concerne la réalisation de conduites de très grandes sections notamment pour le transport d'un fluide sous une pression importante, pouvant, par exemple, dépasser dix bars. L'invention s'applique spécialement à la réalisation de conduites forcées pour les usines hydroélectriques, de circuits d'adduction d'eau ou d'assainissement, mais peut aussi s'appliquer au transport de gaz sous pression, par exemple à des gazoducs ou bien à des circuits de chauffage urbain.

D'une façon générale, une conduite de grande section est constituée d'une enceinte tubulaire allongée qui peut être réalisée en une matière moulée telle que du béton ou bien en métal. Lorsque la conduite doit résister à une forte pression interne, il est avantageux de la réaliser en métal car elle peut alors être constituée de panneaux juxtaposés relativement légers, faciles à manutentionner, qui peuvent être soudés les uns et autres pour former une enceinte tubulaire fermée présentant, généralement, une section circulaire, et qui résiste particulièrement bien aux efforts de traction engendrés par l'application de la pression interne.

Les conduites forcées, utilisées dans les installations hydroélectriques, sont généralement réalisées de cette façon.

Cependant, la conduite doit, normalement, reposer sur le sol, généralement par l'intermédiaire d'appuis espacés et, si elle présente une bonne résistance lorsqu'elle est soumise à la pression interne, en revanche, elle a tendance à se déformer en l'absence de pression, lors du montage, ou même simplement en cas de diminution de pression. Une telle déformation, qui se traduit par une ovalisation de la conduite, est en particulier gênante lors de l'assemblage des différents panneaux qui, pour éviter ces déformations, doivent, normalement, être montés sur un gabarit de section voulue, avant d'être soudés.

Le risque de déformation est encore plus grand pour des sections très importantes, par exemple de plusieurs mètres carrés. On peut utiliser des éléments tubulaires en béton armé qui présentent l'avantage de ne pas se déformer lorsqu'ils sont posés sur le sol et remblayés, mais, pour des sections importantes, de tels éléments sont lourds et encombrants. En outre, une conduite à section circulaire, qui repose simplement sur sa partie inférieure, exerce sur le sol une contrainte localisée importante qui peut entraîner, par effet de poinçonnement, des tassements différentiels et, par conséquent, des désordres. De plus, il est difficile de réaliser, entre les éléments adjacents, des joints suffisamment étanches pour résister à de très fortes pressions.

Pour résoudre de tels problèmes, l'inventeur a déjà proposé, dans le brevet FR-A-2.685.304, de réaliser des conduites mixtes constituées d'une enceinte tubulaire métallique ayant, en section droite, une forme circulaire sur une partie de la section et présentant une face inférieure sensiblement plane qui est appliquée et fixée sur une dalle en béton armé ou précontraint. De la sorte, une telle conduite combine les avantages de la construction métallique et de la construction en béton puisque la partie circulaire métallique est soumise seulement à des efforts de traction et peut donc être constituée d'une paroi relativement mince alors que la partie inférieure est appliquée sur la dalle qui peut être prévue de façon à résister aux efforts de flexion ainsi engendrés et qui, en outre, répartit la charge sur une grande surface, ce qui diminue les contraintes appliquées sur le sol et les risques de tassement.

Le brevet FR-A-2.685.304 décrit plusieurs modes de réalisation particulièrement avantageux.

Une telle conduite résiste parfaitement aux efforts internes appliqués, en service, par le fluide transporté, même sous une très forte pression. Cependant, elle peut être soumise également à des efforts externes appliqués, par exemple, par le remblai sous lequel la conduite est enterrée ou simplement par la pression atmosphérique, lorsque la pression interne est diminuée ou supprimée.

Pour mieux résister aux efforts externes, le document FR-A-2.685.304 propose de donner à la conduite une section demi-circulaire. Toutefois, le diamètre d'une telle conduite est évidemment le double, à débit égal, du diamètre d'une conduite à section circulaire. L'emprise de la conduite et, par conséquent, la largeur de la tranchée dans laquelle elle est placée, sont alors augmentées.

Comme on l'a indiqué dans le brevet FR-A-2.685.304, on peut, dans certains cas, se rapprocher autant que possible de la section circulaire qui couvre un secteur supérieur à 180° pouvant aller, par exemple, jusqu'à trois quadrants, la largeur de la dalle en béton étant ainsi diminuée.

Cependant, en augmentant ainsi le secteur couvert par la partie circulaire, on accroît le risque de déformation de celle-ci et, en particulier, des panneaux latéraux lors du montage, ce qui rend difficile l'alignement des panneaux pour le soudage, l'utilisation d'un gabarit étant, en pratique, nécessaire.

D'autre part, cette conduite doit être réalisée sur une fondation terrassée dont le nivellement n'est pas très précis. Les opérations sur chantier pour la manutention et le calage des divers éléments doivent être simplifiées autant que possible.

De plus, même lorsque la conduite est en service, une simple diminution de la pression interne ou même un simple effet de cavitation peut entraîner un affaissement de la partie métallique sous la charge du remblai.

L'invention apporte une solution à de tels problèmes grâce à un nouveau mode de réalisation qui remédie aux inconvénients mentionnés tout en conservant les avantages de la technique connue.

L'invention concerne donc la réalisation d'une conduite de transport de fluide sous une pression interne comprenant, d'une façon générale, une enceinte tubulaire de circulation du fluide limitée par une paroi mince et fixée sur une dalle d'appui rigide en matière moulée, ladite enceinte étant constituée d'une pluralité de panneaux juxtaposés, assemblés le long de leurs côtés adjacents, et comprenant, en section droite, une partie inférieure appliquée et fixée sur la dalle rigide et une partie supérieure incurvée en forme de voûte se raccordant à la partie inférieure le long de deux côtés latéraux de fixation sur la dalle, cette dernière comprenant une face supérieure de fixation de l'enceinte tubulaire, une face inférieure d'appui sur le sol et deux faces latérales.

Conformément à l'invention, la partie supérieure de l'enceinte est constituée, en section droite, d'au moins trois segments de paroi mince, respectivement deux segments latéraux s'étendant chacun entre un côté inférieur et un côté supérieur, et au moins un segment supérieur de fermeture de l'enceinte se raccordant aux côtés supérieurs des segments latéraux et chaque segment latéral de paroi mince est associé à un élément de soutien rigide en matière moulée fixé à sa base sur le côté correspondant de la dalle et s'étendant vers le haut, chaque élément de soutien comprenant une face interne d'application du segment latéral, ayant un profil conjugué à ce dernier et s'étendant depuis le niveau de la face supérieure de la dalle jusqu'à un niveau suffisant pour maintenir la rigidité dudit segment latéral sur toute sa hauteur sans risque d'affaissement, même sous le poids du segment supérieur et en l'absence de pression interne.

De façon particulièrement avantageuse, l'épaisseur de la paroi mince est déterminée en fonction de la nature de celle-ci pour résister tant aux efforts de traction engendrés par l'application de la pression interne qu'aux sollicitations extérieures de remblaiement ou de surpression atmosphérique. Le niveau des côtés supérieurs des segments latéraux est déterminé de façon que le segment supérieur s'étendant entre lesdits côtés supérieurs puisse être constitué en un seul panneau suffisamment rigide pour ne pas risquer de s'affaisser sous son propre poids lorsqu'il est posé sur les segments latéraux.

Dans un mode de réalisation préférentiel, chaque élément de soutien est limité, au-dessous du niveau de la face supérieure de la dalle, et du côté de celle-ci, par une face latérale interne dont au moins une partie est appliquée contre au moins une partie correspondante de la face latérale en vis-à-vis de la dalle, lesdites faces latérales ayant des profils conjugués.

Les deux éléments de soutien sont avantageusement posés sur le sol de part et d'autre de la dalle, chacun par l'intermédiaire d'une base à face inférieure plane, de largeur suffisante pour permettre audit élément de se tenir droit avant solidarisation avec la dalle.

Selon une autre disposition avantageuse de l'invention, les deux éléments de soutien placés de part et d'autre de la dalle, sont solidarisés avec celle-ci soit par des broches d'ancrage, soit par des cables de précontrainte passant dans des gaines alignées ménagées, lors du moulage, à l'intérieur des éléments de soutien et de la dalle en suivant un profil sensiblement parallèle à celui des parties correspondantes de l'enceinte, lesdits cables de précontrainte prenant appui, après mise en tension, sur des faces d'appui ménagées, au moulage, sur l'élément de soutien, au débouché desdites gaines.

Pour réaliser un assemblage étanche entre les panneaux métalliques, les bords latéraux en regard de chaque segment latéral et du segment inférieur de paroi mince sont écartés d'une certaine distance du plan de joint en laissant, de part et d'autre de celui-ci, un évidement dans lequel est placé un couvre-joint soudé, après la pose, sur le segment latéral et sur le segment inférieur de façon à rétablir la continuité de la paroi de l'enceinte.

Selon une autre caractéristique avantageuse, le segment supérieur de paroi mince fermant l'enceinte vers le haut a une largeur supérieure à la distance entre les extrémités supérieures des segments latéraux, de façon à recouvrir celles-ci sur une certaine distance, deux cordons de soudure étant réalisés, après la pose, sur les deux faces, respectivement interne et externe de la paroi mince, le long des extrémités, respectivement, de chaque segment latéral et du segment supérieur.

D'autres caractéristiques avantageuses font l'objet des sous-revendications.

Mais l'invention sera mieux comprise par la description suivante de certains modes de réalisation particuliers, donnés à titre d'exemples et représentés sur les dessins annexés.

La Figure 1 est une vue générale, en perspective, d'un tronçon de conduite selon l'invention.

La Figure 2 est une vue en coupe transversale d'une telle conduite, dans un mode de réalisation préférentiel.

La Figure 3 est une vue de détail, en perspective, d'un joint d'assemblage transversal.

La Figure 4 et la Figure 5 sont des vues de détail, en coupe transversale, montrant d'autres modes de réalisation du joint entre un élément de soutien et la dalle.

La Figure 6 est une vue en coupe transversale d'un autre mode de réalisation de la conduite.

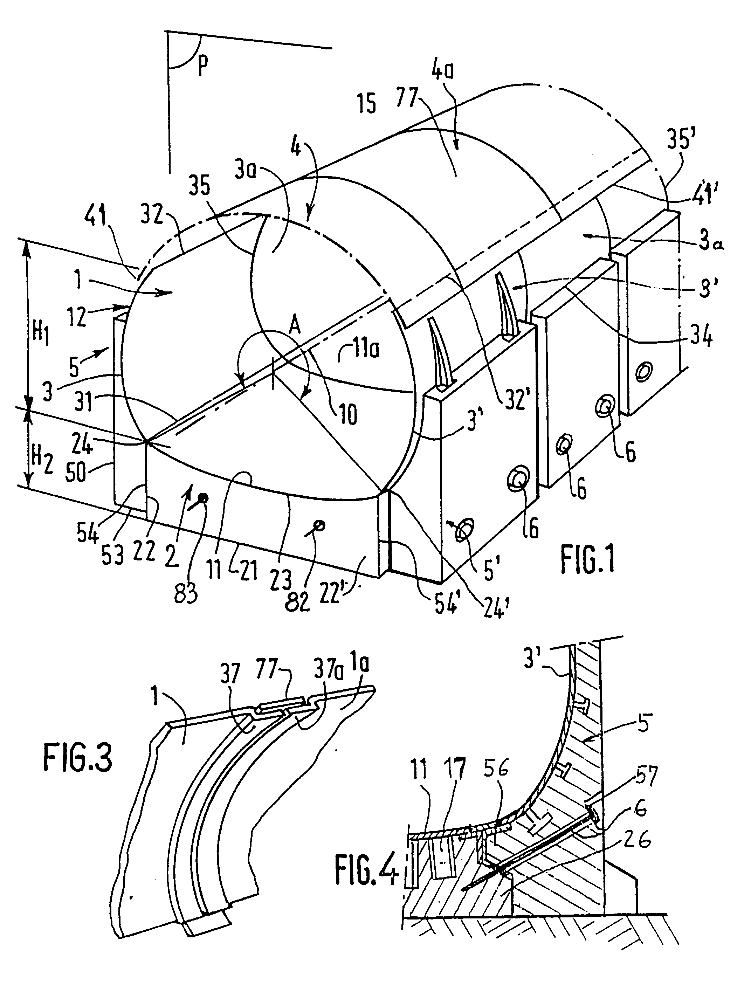

Sur la Figure 1, on a représenté un tronçon d'une conduite selon l'invention qui comprend, d'une façon générale, une enceinte tubulaire métallique 1 fixée sur une dalle rigide en béton armé 2 comprenant une face inférieure plane 21, deux faces latérales 22, 22', et une face supérieure 23.

L'enceinte est posée sur une surface aplanie et tassée qui peut être, par exemple, le fond B d'une tranchée C, l'enceinte étant, après la construction, recouverte d'un remblai.

L'enceinte tubulaire 1 est limitée par une paroi mince métallique, entièrement fermée en section droite, qui comprend une partie inférieure 11 appliquée sur la face supérieure 23 de la dalle 2 et une partie supérieure 12 de forme cylindrique centrée sur un axe longitudinal 10.

La partie inférieure 11, qui s'étend entre les deux bords latéraux 24, 24', de la dalle 2, est plane ou faiblement incurvée. La partie supérieure 12 couvre, en section droite, un secteur circulaire, et s'étend, entre les deux bords latéraux 24, 24', sur un angle A supérieur à 180°.

L'enceinte tubulaire métallique 1 est constituée de panneaux juxtaposés, soudés le long de leurs côtés adjacents, et qui, normalement, couvrent, en section droite, quatre segments de la paroi, respectivement un segment inférieur 11 s'étendant le long de la dalle 2 entre les deux bords latéraux 24, 24', de celle-ci, et trois segments 13, 13', 14, constituant la partie supérieure 12 de l'enceinte, respectivement deux segments latéraux 3, 3', et un segment supérieur 4.

Chaque segment latéral 3, 3', se dresse verticalement entre un bord inférieur 31 s'étendant le long du bord latéral 24 correspondant de la partie inférieure 11 et un bord supérieur 32, placé à une hauteur H1 au-dessus dudit bord latéral 24.

L'élément supérieur 4 couvre un arc dont la corde est un peu supérieure à la distance entre les bords supérieurs 32, 32', des segments latéraux 3, 3', de telle sorte que les extrémités 41, 41', du segment supérieur 4 recouvrent, sur une certaine longueur, les extrémités 32, 32', des segments latéraux 3, 3'.

Le segment supérieur 4 forme ainsi une calotte métallique reposant sur les deux segments latéraux 3, 3', et qui peut être suspendue à un palonnier de manutention, soit par des pinces s'engageant sur les bords latéraux 41, 41', soit par des crochets s'engageant sur des points d'ancrage ménagés à cet effet sur la calotte.

Cependant, le niveau H1 des extrémités supérieures 32 des segments latéraux 3 est déterminé de telle sorte que la distance D entre les extrémités latérales 41, 41', de la calotte 4 soit assez réduite pour éviter une déformation excessive de celle-ci sous son propre poids, compte tenu de la nature du métal qui constitue la paroi métallique, de son épaisseur et de sa rigidité.

Selon la caractéristique essentielle de l'invention, chaque segment latéral 3, 3', est appliqué sur un élément de soutien 5, 5', constitué d'une pièce allongée en béton armé et/ou précontraint susceptible d'être placée à côté de la dalle 2 et comportant une face incurvée 51 de profil conjugué à celui du segment latéral 3 qui peut ainsi être appliqué et fixé sur l'élément de soutien 5 tout le long de la face 51. Celle-ci s'étend sur la plus grande partie de la longueur du segment latéral 3 à partir de son extrémité inférieure 31. De la sorte, seule une partie de faible longueur 33 du segment latéral 3 s'étend vers le haut à partir du niveau de l'extrémité supérieure 52 de l'élément de soutien 5 et jusqu'à l'extrémité supérieure 32 de l'élément 3. La hauteur H2 de la face de soutien 51 est déterminée de façon à maintenir la rigidité du segment latéral 3 sur toute sa hauteur, la longueur de l'extrémité en porte-à-faux 33 étant assez faible pour que celle-ci ne se déforme pas, même sous le poids de la calotte supérieure 4.

En cas de besoin, d'ailleurs, des pattes d'appui 34, en forme de cornières incurvées, pourraient être boulonnées sur la face supérieure 52 de l'élément de soutien 5 pour maintenir la rigidité de l'extrémité 33 du segment latéral 3.

Dans un tel mode de réalisation, la dalle 2 est constituée, comme les éléments de soutien 5, 5', par des éléments préfabriqués placés bout à bout. Les segments de paroi mince 3, 11, peuvent être associés, au moulage, aux parties en béton 5, 2, qui sont avantageusement coulées à plat. Chaque face métallique 3, 11, constitue alors le fond du moule et est munie de parties d'ancrage en saillie 17, qui sont noyées dans le béton lors de la coulée. Après démoulage, l'élément en béton muni de la face métallique correspondante est retourné pour constituer la dalle 2 ou redressé pour constituer un élément de soutien 5, 5'.

Une telle conduite peut être construite, à l'avancement, par tronçons successifs, de la façon suivante :
- on découpe et on met en forme des éléments incurvés de paroi mince couvrant respectivement au moins quatre segments de la périphérie de l'enceinte tubulaire 1, respectivement deux segments latéraux 3, un segment inférieur 11 et un segment supérieur 4,
- on réalise, à l'avance, et en nombre voulu, deux types d'éléments préfabriqués en béton armé munis chacun sur une face, d'un segment de paroi mince constituant un coffrage perdu scellé dans le béton, respectivement des éléments de dalle 2 en béton armé recouverts d'un segment inférieur 11 et des éléments de soutien 5 ayant une face incurvée recouverte d'un segment latéral 3,
- ces éléments préfabriqués ayant été apportés, en nombre voulu, sur le chantier, pour construire un nouveau tronçon de conduite à la suite d'une partie déjà réalisée, on place sur la surface de pose B un élément de dalle 2 et deux éléments de soutien 5, 5', en les alignant avec les éléments correspondants de la partie réalisée et en appliquant l'une sur l'autre les faces latérales en regard des éléments de soutien 5 et de la dalle 2,
- on réalise les soudures, d'une part, entre les segments 11, 3, 3' du tronçon qui vient d'être posé, le long des côtés inférieurs 31, 31' et supérieurs 32, 32', et, d'autre part, dans le plan transversal P de jonction, entre chaque segment 3, 11 du nouveau tronçon et les segments correspondants 3a, 11a de la partie déjà réalisée, le long de leurs côtés adjacents,
- on pose le segment supérieur de paroi 4 sur les extrémités supérieures 32, 32' des segments latéraux 3, 3' et l'on soude ledit segment supérieur 4 longitudinalement avec les segments latéraux 3, 3' et transversalement avec le segment supérieur de la partie déjà réalisée.

De préférence, chaque élément de soutien 5 repose directement sur le sol par une face plane 53 et est muni, au-dessous de la face 51 d'application du segment 3, d'une face d'appui 52 qui vient s'appliquer contre la face latérale correspondante 22 de la dalle 2.

L'application des éléments de soutien 5 contre la dalle 2, peut être réalisée, par exemple, au moyen d'une pluralité de broches 6 passant dans des orifices 60 ménagés à la partie inférieure des éléments de soutien 5, 5', et dont les extrémités 61 se vissent dans des alésages filetés 62 constitués d'inserts qui sont scellés au moulage sur les côtés de la dalle 2. Mais on peut aussi utiliser des barres traversant l'ensemble formé par la dalle 2 et les deux éléments de soutien 5.

Dans le mode de réalisation le plus simple représenté sur la Figure 1, les deux faces latérales 22, 22', de la dalle 2 sont planes ainsi que les faces d'appui 52, 52', des éléments de soutien 5, 5'.

La Figure 2 montre un mode de réalisation plus perfectionné dans lequel les faces latérales 22, 22', de la dalle 2 et les faces conjuguées 52, 52', des éléments de soutien 5, présentent un profil étagé, comportant, dans sa partie centrale, des faces inclinées ou horizontales, respectivement 25, 55, créant un emboîtement qui évite le mouvement relatif des éléments de soutien par rapport à la dalle.

On notera que les faces étagées 22, 52, peuvent avantageusement être renforcées par des parois métalliques servant de coffrage perdu de façon à assurer une parfaite application des deux faces conjuguées l'une sur l'autre et, en outre, à éviter les risques de détérioration lors des manutentions des éléments préfabriqués.

Grâce à ces dispositions, les éléments de soutien 5, 5', sont parfaitement maintenus par emboîtement sur les côtés de la dalle 2, et ne risquent pas de se décaler par rapport à celle-ci, ce qui favorise la liaison par soudure entre les segments latéraux 3, 3' et le segment inférieur 11 de la paroi mince.

Pour améliorer cette liaison, il est avantageux d'arrêter le bord inférieur 31 de chaque segment latéral 3, 3', et le bord en regard 11' du segment inférieur 11, à une certaine distance de part et d'autre du plan de joint Q entre la dalle et l'élément de soutien, de façon à laisser deux évidements alignés 36, 16, d'épaisseur sensiblement égale à celle de la paroi mince, dans lesquels est placé un couvre-joint 7 constitué d'une bande métallique de même épaisseur et qui est coudée de façon à présenter deux ailes 71, 72, se raccordant tangentiellement, respectivement à l'extrémité inférieure du segment latéral 3 et à l'extrémité correspondante du segment inférieur 11 de la paroi mince.

Comme on l'a indiqué sur la Figure 2, les deux côtés 36, 37, de l'évidement peuvent être constitués par des parties croquées ménagées le long des extrémités en regard des segments de paroi mince 3, 11.

De la sorte, chaque couvre-joint 7 assure la continuité de la paroi métallique sans autre saillie vers l'intérieur que les cordons de soudure 73, 73', qui sont réalisés entre les bords latéraux du couvre-joint 7 et les bords internes des parties croquées, respectivement 36, 16, du segment latéral 3 et du segment inférieur 11.

Le long des joints transversaux 35 entre les éléments adjacents, les segments métalliques peuvent être soudés bout à bout. En particulier, comme le montre la Figure 1, l'élément de soutien en béton 5 ne doit pas nécessairement couvrir toute la longueur de la paroi métallique correspondante 30 et celle-ci peut donc dépasser aux extrémités pour faciliter la soudure.

Mais on peut aussi, comme on l'a représenté sur la Figure 3, ménager des parties croquées 37, 37a, sur les extrémités en vis-à-vis des segments adjacents 3, 3a, 11, 11a, pour limiter un évidement dans lequel est placée une bande couvre-joint 77. Celle-ci peut être disposée à l'extérieur pour faciliter sa mise en place ou bien à l'intérieur, comme les bandes longitudinales 71, si l'on veut éviter des saillies à l'intérieur de la conduite.

Pour éviter des soudures en croix, on peut éventuellement décaler les plans de joint transversaux, d'une part entre les segments latéraux 3, 3a, et, d'autre part, entre les segments supérieurs 4, 4a et les segments inférieurs 11, 11a.

Il faut noter que l'application l'une sur l'autre des faces latérales 22, 52, de la dalle et des éléments de soutien peut se faire par une partie seulement 22a, 52a, de celles-ci dans laquelle sont ménagés les orifices de passage des broches 6, avec interposition d'un joint compressible 64 qui entoure la broche.

Chaque broche 6 est, de préférence, perpendiculaire aux faces d'application 22a, 52a, comme indiqué sur la Figure 2. Cependant, il peut être avantageux, dans certains cas, d'incliner la broche 6 par rapport aux faces d'application 22a, 52a, comme on l'a indiqué sur la Figure 4.

Pour alléger la dalle 2 et améliorer sa résistance aux efforts de flexion engendrés par l'application de la pression interne, il est avantageux de la soumettre à une précontrainte transversale.

Dans ce cas, les broches 6 servent essentiellement au maintien provisoire des éléments de soutien 5 qui sont définitivement solidarisés avec la dalle 2 par des câbles de précontrainte 8 qui entourent la partie inférieure de la conduite en passant dans des gaines 80 incorporées, lors du moulage, dans les éléments de dalle 2 et les éléments de soutien 5 et qui se raccordent tangentiellement dans les plans de joint. Chaque câble de précontrainte 8 est muni d'une tête d'ancrage 81 qui prend appui sur une face correspondante 57 ménagée sur le côté extérieur de l'élément de soutien 5 perpendiculairement à la direction du câble, à la sortie de celui-ci.

De même, des gaines 83 parallèles à l'axe 10 de la conduite peuvent être ménagées dans la dalle 2 et, éventuellement, dans les éléments de soutien 5 pour permettre le passage de câbles 82 qui, après mise en tension, assurent la solidarisation des tronçons adjacents avec une précontrainte longitudinale de l'ensemble permettant, notamment, de mieux résister aux tassements différentiels.

A la partie supérieure, comme on l'a indiqué, chaque élément de calotte 4 présente simplement une largeur supérieure à la distance entre les extrémités supérieures 32, 32', des segments latéraux 3, 3', de façon à recouvrir celles-ci et des cordons de soudure 74, 75, sont réalisés à l'intérieur, le long des bords 32, 32', des segments latéraux 3, 3', et à l'extérieur, le long des bords 4, 4', de la calotte 4.

Pour améliorer la stabilité des éléments de soutien 5, il peut être avantageux de munir ceux-ci, à leur base, de parties en forme de sabot qui s'étendent vers l'extérieur pour élargir la face inférieure 53 de chaque élément 5.

Par ailleurs, de tels sabots améliorent la stabilité de l'élément de soutien 5 en s'opposant au renversement vers l'extérieur de celui-ci avant la mise en place du remblai.

Bien entendu, l'invention ne se limite pas aux détails des deux modes de réalisation qui viennent d'être décrits à titre de simple exemple, d'autres variantes pouvant être envisagées sans s'écarter du cadre de protection défini par les revendications.

Par exemple, dans un autre mode de réalisation utilisant la technique dite du "béton confiné", chaque élément de la dalle 2 est limité, sur toutes ses faces, par une paroi métallique fermée recouvrant non seulement la face supérieure 11, mais également la face inférieure 21 et les faces latérales 22 de façon à constituer un caisson creux qui est rempli de béton avec une légère surpression permettant de compenser le retrait. On peut alors supprimer les armatures, celles-ci étant remplacées par les parois du caisson.

Mais la dalle 2 peut aussi être coulée en place, à l'avancement, entre deux coffrages ou bien entre les faces internes 52, 52', des éléments de maintien 5, 5'. Dans ce cas, la partie inférieure 11 de la paroi métallique peut être constituée de segments découpés qui sont appliqués sur le béton avant la prise de celui-ci. La dalle en béton préalablement coulée peut aussi être munie d'évidements remplis de mortier et dans lesquels s'engagent des parties d'ancrage soudées sur la face inférieure de chaque segment de paroi 11, un coulis de ciment pouvant être injecté entre le segment métallique et la face supérieure 23 de la dalle pour assurer la solidarisation et la transmission des efforts de pression.

Dans un tel cas, par exemple, après avoir réalisé la conduite sur une certaine longueur et préparé une surface de pose aplanie dans le prolongement de celle-ci, on pose tout d'abord des éléments de maintien 5, 5', munis, respectivement, de segments latéraux 3, 3', en les alignant avec la partie déjà posée et l'on soude les segments latéraux adjacents le long de leurs bords transversaux 35. On place alors le ferraillage de la dalle 2 et, le cas échéant, les gaines de précontrainte que l'on aligne avec les gaines correspondantes ménagées dans les éléments de côté 5, 5'. On coule ensuite la dalle en béton sur laquelle on scelle le segment inférieur 11. On passe alors les câbles de précontrainte que l'on met en tension et, les différents éléments étant bien appliqués, on soude le segment 11 le long de son bord transversal 15 avec le segment 11a de la partie déjà posée et le long de ses bords latéraux avec les bords 31 des segments latéraux 3, 3'.

On peut alors poser la calotte 4 en la soudant avec la calotte 4a déjà posée et avec les segments latéraux 3, 3'.

Par ailleurs, on peut aussi inverser le profil étagé des faces latérales 22, 52, de la dalle 2 et des éléments de soutien 5, 5' de la façon indiquée sur la Figure 4, la dalle 2 étant alors munie de rebords inférieurs 26 qui passent au-dessous de rebords supérieurs 56 de l'élément de soutien 5. Une telle disposition permet, lorsque l'on construit un nouveau tronçon, de placer d'abord un ou plusieurs éléments de dalle dans le prolongement de la partie déjà posée en les reliant, éventuellement, à celle-ci, par des barres de précontrainte, puis de poser les éléments de soutien 5, 5', en nombre voulu, de part et d'autre de la dalle qui constitue une référence d'alignement.

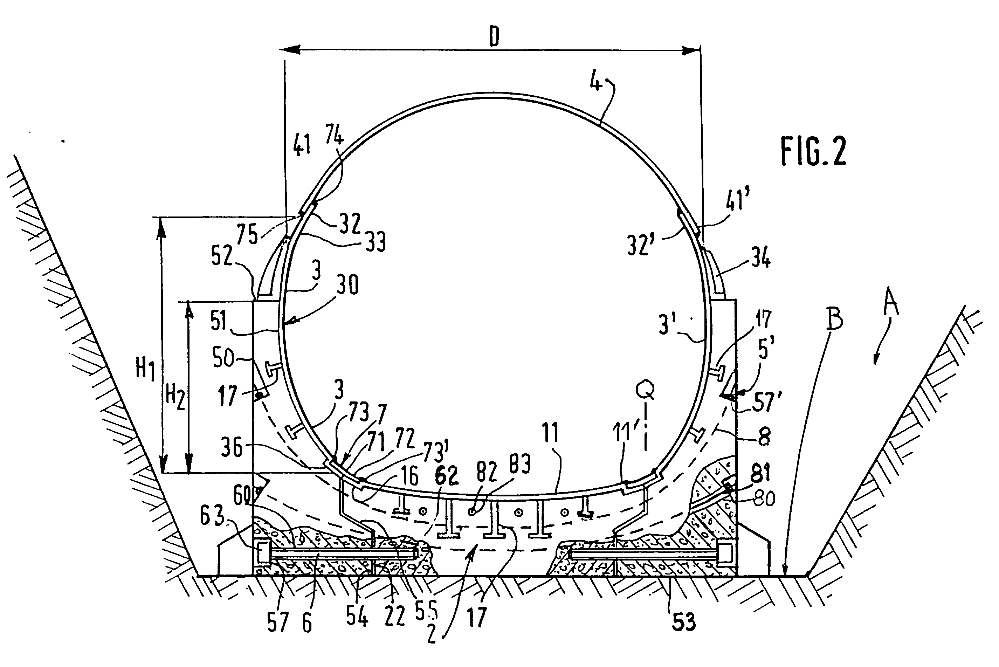

Comme on l'a indiqué sur la Figure 5, les bords latéraux en regard de chaque élément de soutien 5, 5' et de la dalle 2 peuvent être recouverts par des cornières de protection 57, 27, constituant des coffrages perdus et sur lesquelles sont soudées les extrémités 31, 11', des segments de paroi 3, 11, qui sont arrêtés à une certaine distance du plan de joint Q, pour ménager les deux côtés 36, 16, de l'évidement dans lequel est placé le couvre-joint 7.

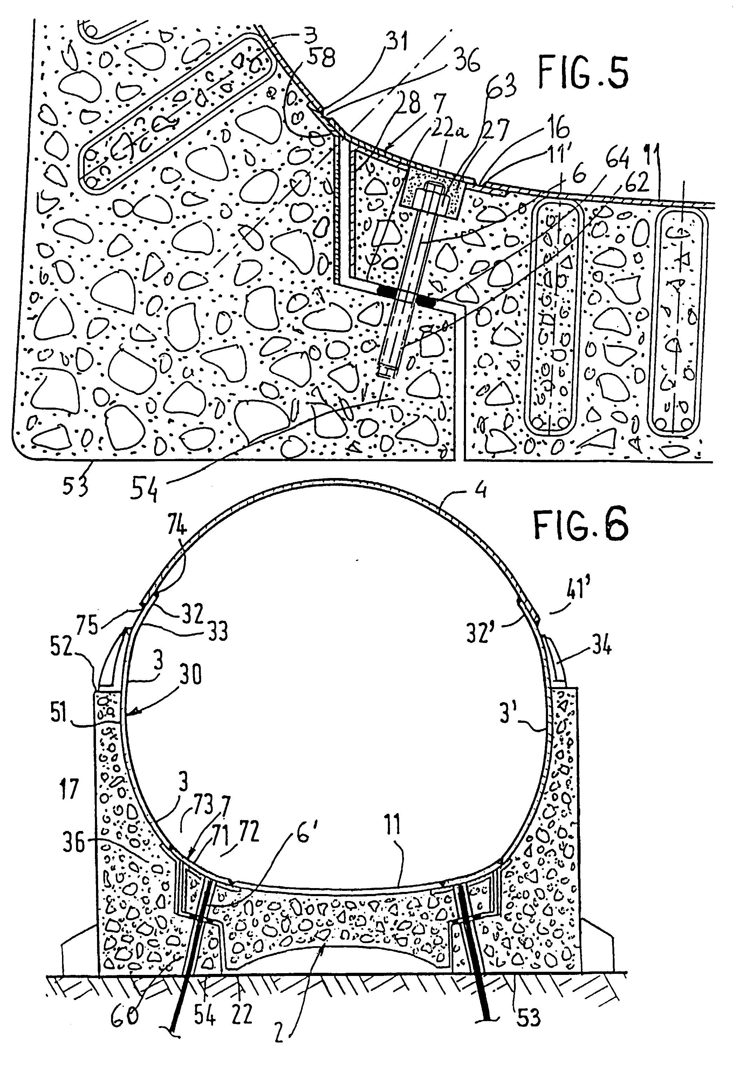

D'autre part, il peut être avantageux, notamment pour réduire la largeur de la tranchée C, de mettre en place les broches 6 à partir de l'intérieur de la conduite, comme on l'a indiqué sur les Figures 5 et 6.

Dans ce cas, pour réaliser un nouveau tronçon de la conduite, on place d'abord les deux éléments de soutien 5, 5', en les alignant avec les éléments correspondants de la partie déjà réalisée. Les éléments 5, 5', sont munis de rebords inférieurs 54 dans lesquels ont été scellés des inserts 62 filetés intérieurement.

Après avoir placé des joints 64 au débouché de chaque insert 62, on pose les éléments de dalle 2 qui s'emboîtent entre les éléments de soutien 5, 5' et qui sont munis d'orifices 60 venant dans l'alignement des inserts 62.

On met en place alors les broches 6 dont la tête 63, qui peut être constituée d'un écrou, est logée dans un évidement 27 ménagé dans la face supérieure de la dalle 2.

Après serrage des broches 6, le couvre-joint 7 est mis en place et soudé sur les cornières 28, 58.

On notera que, dans le cas où les risques d'éboulement sont importants, les segments supérieurs 4 peuvent être posés sur les segments latéraux 3, 3', dès la mise en place des éléments de dalle 2 de façon à protéger les ouvriers pendant les opérations de pose des broches et de soudure des joints.

Selon une autre caractéristique avantageuse représentée sur la Figure 6, les orifices 60 de passage des broches 6 traversent complètement la dalle 2 et les éléments de soutien 5. Après mise en place des éléments préfabriqués, on peut réaliser, dans le sol, des forages dans lesquels sont scellés des tirants 6' de grande longueur. Une telle disposition peut être utilisée, par exemple, dans le cas où la conduite est noyée dans la nappe phréatique et où l'effet de lest apporté par les éléments de soutien 5, 5', et la dalle 2, risque de ne pas compenser suffisamment la poussée d'Archimède.

Comme le montre également la Figure 6, il est possible également de donner à la dalle 2 une épaisseur inférieure à celle des faces latérales 52 des éléments de soutien 5, 5', de façon que la dalle 2 ne repose pas sur le sol mais seulement sur les éléments de soutien 5, 5', par des rebords supérieurs 26a. Le profil de la dalle 2, en section transversale, doit alors être simplement prévu pour lui permettre, compte tenu du ferraillage, de résister aux efforts de flexion appliqués par le segment inférieur 11 soumis à la pression régnant à l'intérieur de l'enceinte.

Les signes de référence insérés après les caractéristiques techniques mentionnées dans les revendications, ont pour seul but de faciliter la compréhension de ces dernières et n'en limitent aucunement la portée.

## Revendications

1. Conduite de circulation de fluide sous une pression interne comprenant, d'une façon générale, une enceinte tubulaire (1) limitée par une paroi mince (1) et fixée sur une dalle d'appui rigide (2) en matière moulée, ladite enceinte (1) étant constituée d'une pluralité de panneaux juxtaposés, assemblés le long de leurs côtés adjacents, et comprenant, en section droite, une partie inférieure (11) appliquée et fixée sur la dalle rigide (2) et une partie supérieure (12) incurvée en forme de voûte se raccordant à la partie inférieure (11) le long de deux côtés latéraux (31, 31') de fixation sur la dalle, cette dernière comprenant une face supérieure (23), une face inférieure (21) et deux faces latérales (22, 22'),
caractérisée par le fait que la partie supérieure (12) de l'enceinte (1) est constituée, en section droite, d'au moins trois segments de paroi mince, respectivement deux segments latéraux (3, 3') s'étendant chacun entre un côté inférieur (31) et un côté supérieur (32), et au moins un segment supérieur (4) de fermeture de l'enceinte (1) se raccordant aux côtés supérieurs (32, 32') des segments latéraux (3, 3') et que chaque segment latéral de paroi mince (3, 3') est associé à un élément de soutien rigide (5, 5') en matière moulée fixé à sa base sur le côté correspondant de la dalle (2) et s'étendant vers le haut de chaque élément de soutien (5, 5') comprenant une face interne (51, 51') tournée vers l'enceinte (1) ayant un profil conjugué à celui du segment latéral et sur laquelle est appliqué celui-ci, ladite face interne (51, 51') s'étendant depuis le niveau de la face supérieure (23) de la dalle (2) jusqu'à un niveau (H2) suffisant pour maintenir la rigidité dudit segment latéral sur toute sa hauteur (H1) sans risque d'affaissement, même sous le poids du segment supérieur (4) et sans application de la pression interne.

2. Conduite sous pression selon la revendication 1, caractérisée par le fait que l'épaisseur de la paroi mince (1) est déterminée en fonction de la nature de celle-ci pour résister simplement aux efforts de traction engendrés par l'application de la pression interne et que le niveau (H1) des côtés supérieurs (32, 32') des segments latéraux (3, 3') est déterminé de façon que le segment supérieur (4) s'étendant entre lesdits côtés supérieurs puisse être constitué en un seul panneau suffisamment rigide pour ne pas risquer de s'affaisser sous son propre poids lorsqu'il est posé sur les segments latéraux (3, 3').

3. Conduite sous pression selon l'une des revendications 1 et 2, caractérisée par le fait que les deux éléments de soutien (5, 5') sont posés sur le sol de part et d'autre de la dalle (2), chacun par l'intermédiaire d'une base à face inférieure plane (53).

4. Conduite sous pression selon l'une des revendications 1 à 3, caractérisée par le fait que chaque élément de soutien (5, 5') est limité, au-dessous du niveau de la face supérieure (23) de la dalle (2) et du côté de celle-ci par une face latérale interne (52) dont au moins une partie (52a) est appliquée contre au moins une partie correspondante de la face latérale en vis-à-vis (22) de la dalle (2), lesdites faces latérales (22) de la dalle et (52) des éléments de maintien (5) ayant des profils conjugués.

5. Conduite sous pression selon la revendication 4, caractérisée par le fait que chaque élément de soutien (5, 5') est associé à des moyens (6, 8) de solidarisation des éléments de soutien (5, 5') avec la dalle (2) par application l'une sur l'autre au moins des parties correspondantes (52a, 22a) des faces latérales conjuguées (52, 22).

6. Conduite sous pression selon la revendication 5, caractérisée par le fait que les moyens de solidarisation des deux éléments de soutien (5, 5') avec la dalle (2), sont constitués par une pluralité de câbles de précontrainte transversale (8) passant dans des gaines alignées (81) ménagées, lors du moulage, à l'intérieur des éléments de soutien (5) et de la dalle (2) en suivant un profil sensiblement parallèle à celui des parties correspondantes de l'enceinte, lesdits câbles de précontrainte (8) prenant appui, après mise en tension, sur des faces d'appui (57') ménagées, au moulage, sur l'élément de soutien, au débouché desdites gaines (81).

7. Conduite sous pression selon la revendication 5, caractérisée par le fait que les moyens (6) de solidarisation des éléments de soutien (5, 5') avec la dalle (2) sont constitués d'une pluralité de broches (6) s'étendant transversalement aux parties d'application conjuguées (52a, 22a) desdites faces latérales et réparties sur la longueur de chaque élément (5), chaque broche (6) prenant appui par une extrémité (63) sur l'élément de soutien (5) et par l'autre extrémité (61) sur la dalle (2), ou inversement.

8. Conduite sous pression selon la revendication 7, caractérisée par le fait que chaque broche de solidarisation (6) passe dans des orifices alignés ménagés dans l'élément de soutien (5) et la dalle (2), et comprend une extrémité interne (61) scellée dans la dalle (2) et une tête (63) d'appui sur l'élément de soutien (5), ou inversement.

9. Conduite sous pression selon la revendication 8, caractérisée par le fait que les broches de solidarisation (6) sont placées à partir de l'extérieur et prennent appui chacune, par sa tête (63), sur la face latérale externe (50) de l'élément de soutien (5).

10. Conduite sous pression selon l'une des revendications 4 à 9, caractérisée par le fait que les faces latérales conjuguées (52) (22) de chaque élément de soutien (5, 5') et de la dalle (2) présentent un profil étagé ménageant, le long desdites faces latérales conjuguées (52) (22), des parties, respectivement en saillie et en retrait, qui s'emboîtent les unes dans les autres.

11. Conduite sous pression selon la revendication 10, caractérisée par le fait que les faces latérales conjuguées (52) des éléments de soutien (5) et (22) de la dalle (2) comprennent, dans leur partie centrale, une partie d'application (52a) (22a) faisant un angle inférieur à 45° avec l'horizontale.

12. Conduite sous pression selon l'une des revendications 10 et 11, caractérisée par le fait que la face latérale interne (52) de chaque élément de soutien (5) comprend, à sa base, un rebord inférieur en saillie (54) qui s'engage au-dessous d'un rebord correspondant (25) ménagé à la partie supérieure de la face latérale correspondante (22) de la dalle (2).

13. Conduite sous pression selon la revendication 12, caractérisée par le fait que la dalle (2) a une épaisseur inférieure à la distance entre la partie inférieure (11) de la paroi (1) et le sol (B) et prend appui, par ses rebords supérieurs (25), sur les deux éléments de soutien (5, 5') qui l'encadrent.

14. Conduite sous pression selon l'une des revendications 10 à 13, caractérisée par le fait que les broches de solidarisation (6) sont placées à partir de l'intérieur de l'enceinte (1) et traversent les parties d'application (52a, 22a), chaque broche (6) prenant appui, par sa tête (63), sur la face supérieure (23) de la dalle (2).

15. Conduite sous pression selon la revendication 14, caractérisée par le fait que les broches de solidarisation (6) sont prolongées de façon à s'étendre dans des forages ménagés dans le terrain sous-jacent et sont scellées avec celui-ci.

16. Conduite sous pression selon l'une des revendications précédentes, caractérisée par le fait que le bord inférieur (31) de chaque segment latéral (3) de paroi mince et les bords latéraux (11') correspondants du segment inférieur (11) appliqué sur la dalle (2), sont écartés d'une certaine distance du plan de joint (Q) entre l'élément de soutien (5) et la dalle (2) en laissant, de part et d'autre dudit plan (Q), un évidement recouvert par un couvre-joint (7) qui est soudé, après la pose, avec le segment latéral (3) et le segment inférieur (11), de façon à rétablir la continuité de la face interne de l'enceinte.

17. Conduite sous pression selon la revendication 16, caractérisée par le fait que les extrémités en regard (31) de chaque segment latéral (3) et (11') du segment inférieur (11) sont munies de parties croquées (36, 16) limitant l'évidement dans lequel est placé le couvre-joint (7).

18. Conduite sous pression selon l'une des revendications précédentes, caractérisée par le fait que le segment supérieur (4) de paroi mince fermant l'enceinte vers le haut, a une largeur supérieure à la distance entre les extrémités supérieures (32, 32') des segments latéraux (3, 3'), de façon à recouvrir celles-ci sur une certaine distance, deux cordons de soudure (74, 75) étant réalisés, après la pose, sur les deux faces, respectivement interne et externe de la paroi mince, le long des extrémités, respectivement, de chaque segment latéral (3) et du segment supérieur (4).

19. Procédé de construction d'une conduite de transport de fluide, posée sur une surface (B) aplanie et tassée, et constituée d'une enceinte tubulaire limitée par une paroi mince et fixée sur une dalle d'appui rigide en matière moulée, caractérisé par le fait que :
- on découpe et on met en forme des éléments incurvés de paroi mince couvrant respectivement au moins quatre segments de la périphérie de l'enceinte tubulaire (1), respectivement deux segments latéraux (3), un segment inférieur (11) et un segment supérieur (4),
- on réalise, à l'avance, et en nombre voulu, deux types d'éléments préfabriqués en béton armé munis chacun sur une face, d'un segment de paroi mince constituant un coffrage perdu scellé dans le béton, respectivement des éléments de dalle (2) en béton armé recouverts d'un segment inférieur (11) et des éléments de soutien (5) ayant une face incurvée recouverte d'un segment latéral (3),
- ces éléments préfabriqués ayant été apportés, en nombre voulu, sur le chantier, pour construire un nouveau tronçon de conduite à la suite d'une partie déjà réalisée, on place sur la surface de pose (B) un élément de dalle (2) et deux éléments de soutien (5, 5') en les alignant avec les éléments correspondants de la partie réalisée et en appliquant l'une sur l'autre les faces latérales en regard des éléments de soutien (5) et de la dalle (2),
- on réalise les soudures, d'une part, entre les segments (11, 3, 3') du tronçon qui vient d'être posé, le long des côtés inférieurs (31, 31') et supérieurs (32, 32'), et, d'autre part, dans le plan transversal (P) de jonction, entre chaque segment (3, 11) du nouveau tronçon et les segments correspondants (3a, 11a) de la partie déjà réalisée, le long de leurs côtés adjacents,
- on pose le segment supérieur de paroi (4) sur les extrémités supérieures (32, 32') des segments latéraux (3, 3') et l'on soude ledit segment supérieur (4) longitudinalement avec les segments latéraux (3, 3') et transversalement avec le segment supérieur de la partie déjà réalisée.

20. Procédé selon la revendication 19, caractérisé par le fait que les deux éléments de soutien (5, 5') sont d'abord placés sur la surface de pose de part et d'autre de l'axe longitudinal de la conduite et alignés avec les éléments correspondants de la partie déjà posée, puis l'élément de dalle (2) est placé entre lesdits éléments de soutien (5, 5').

21. Procédé de construction d'une conduite de transport de fluide, posée sur une surface (B) aplanie et tassée, et constituée d'une enceinte tubulaire limitée par une paroi mince et fixée sur une dalle d'appui rigide en matière moulée, caractérisé par le fait que :
- on découpe et on met en forme des éléments incurvés de paroi mince couvrant respectivement au moins quatre segments de la périphérie de l'enceinte tubulaire (1), respectivement deux segments latéraux (3), un segment inférieur (11) et un segment supérieur (4),
- on réalise, à l'avance, et en nombre voulu, des éléments de soutien (5, 5') préfabriqués en béton armé ayant chacun une face incurvée sur laquelle est appliqué et scellé un segment latéral de paroi mince (3) constituant un coffrage perdu,
- ces éléments préfabriqués ayant été apportés, en nombre voulu, sur le chantier, pour construire un nouveau tronçon de conduite à la suite d'une partie déjà réalisée, on place sur la surface de pose (B) deux éléments de soutien (5, 5') en les alignant avec les éléments correspondants de la partie réalisée,
- des éléments de soutien (5, 5') étant ainsi posés et alignés sur une certaine distance, on coule une longueur correspondante de dalle (2) entre les faces latérales (52, 52') des éléments de soutien (5, 5') et l'on scelle sur ladite dalle (2) un nombre voulu de segments inférieurs (11) de paroi mince,
- on réalise les soudures, d'une part, entre les segments (11, 3, 3') du tronçon qui vient d'être posé, le long des côtés inférieurs (31, 31') et supérieurs (32, 32'), et, d'autre part, dans le plan transversal (P) de jonction, entre chaque segment (3, 11) du nouveau tronçon et les segments correspondants (3a, lla) de la partie déjà réalisée, le long de leurs côtés adjacents,
- on pose le segment supérieur de paroi (4) sur les extrémités supérieures (32, 32') des segments latéraux (3, 3') et l'on soude ledit segment supérieur (4) longitudinalement avec les segments latéraux (3, 3') et transversalement avec le segment supérieur de la partie déjà réalisée.

22. Procédé selon l'une des revendications 19 à 21, caractérisé par le fait que, en cas de risque d'éboulements, on pose d'abord le segment supérieur (4) sur les extrémités (32, 32') des segments latéraux (3, 3'), puis l'on réalise l'ensemble des soudures à l'intérieur de l'enceinte (1) ainsi fermée.

## Patentansprüche

1. Medium-Druckumlaufleitung, im allgemeinen bestehend aus einem durch eine dünne Wand (1) begrenzten rohrförmigen Gebilde (1), das auf einer starren aus Formstoff bestehenden Auflageplatte befestigt ist, wobei dieses Gebilde (1) eine Mehrzahl nebeneinander angeordneter, entlang deren anstoßenden Rändern zusammengesetzter Elemente umfaßt und, im Querschnitt gesehen, aus einem auf der starren Bodenplatte (2) aufliegenden und befestigten Unterteil (11) und aus einem gekrümmten als Gewölbe ausgebildeten Oberteil (12) besteht, das sich entlang zweier seitlicher Ränder (31, 31') zur Befestigung an der Bodenplatte an das Unterteil (11) anschließt, wobei die Bodenplatte eine Oberfläche (23), eine Unterfläche (21) und zwei Seitenflächen (22, 22') aufweist, dadurch gekennzeichnet, daß das Oberteil (12) des Gebildes (1), im Querschnitt gesehen, mindestens drei dünnwandige Segmente, und zwar zwei sich jeweils zwischen einem unteren Rand (31) und einem oberen Rand (32) erstreckende Seitensegmente (3, 3') und mindestens ein oberes Segment (4) zum Abschließen des Gebildes (1), umfaßt, das sich an die oberen Ränder (32, 32') der Seitensegmente (3, 3') anschließt, und daß jedes dünnwandige Seitensegment (3, 3') einem starren Stützelement (5, 5') aus Formstoff zugeordnet ist, das mit seiner Basis auf der entsprechenden Seite der Bodenplatte (2) befestigt ist und sich zum oberen Teil des jeweiligen Stützelementes (5, 5') erstreckt, das eine zum Gebilde (1) hin gerichtete Innenfläche (51, 51') mit einem Profil aufweist, das zu dem des Seitensegmentes komplementär ist, und auf der dieses aufliegt, wobei sich diese Innenfläche (51, 51') von der Oberfläche (23) der Bodenplatte (2) aus bis zu einer ausreichenden Höhe (H2) erstreckt, um die Steifheit dieses Seitensegmentes über seine ganze Höhe (H1) auch unter dem Gewicht des oberen Segmentes (4) und ohne Beaufschlagen mit dem Innendruck zu gewährleisten, ohne daß die Gefahr eines Zusammensinkens entsteht.

2. Druckleitung nach Anspruch 1, dadurch gekennzeichnet, daß die Stärke der dünnen Wand (1) entsprechend der Art derselben so bestimmt wird, daß sie den durch die Innendruckbeaufschlagung erzeugten Zugkräften standhält, und daß die Höhe (H1) der oberen Ränder (32, 32') der Seitensegmente (3, 3') so bestimmt wird, daß das sich zwischen diesen oberen Rändern erstreckende obere Segment (4) aus einem ausreichend steifen einteiligen Element bestehen kann, ohne daß es beim Aufsetzen auf die Seitensegmente (3, 3') zu einem Zusammensinken durch sein Eigengewicht kommt.

3. Druckleitung nach einem der Ansprüche 1 und 2, dadurch gekennzeichnet, daß die beiden Stützelemente (5, 5') beiderseits der Bodenplatte (2) und jeweils über eine Basis mit einer ebenen Unterfläche (53) auf der Erde stehen.

4. Druckleitung nach einem der Ansprüche 1 bis 3, dadurch gekennzeichnet, daß jedes Stützelement (5, 5') unterhalb des Niveaus der Oberfläche (23) der Bodenplatte (2) und seitlich derselben durch eine seitliche Innenfläche (52) begrenzt ist, wobei mindestens ein Teil (52a) davon an mindestens einem entsprechenden Teil der gegenüberliegenden Seitenfläche (22) der Bodenplatte (2) anliegt und diese Seitenflächen (22) der Bodenplatte bzw. (52) der Stützelemente (5) komplementäre Profile aufweisen.

5. Druckleitung nach Anspruch 4, dadurch gekennzeichnet, daß jedem Stützelement (5, 5') Mittel (6, 8) zur festen Verbindung der Stützelemente (5, 5') mit der Bodenplatte (2) durch gegenseitiges Aufliegen der entsprechenden Teile (52a, 22a) der komplementären Seitenflächen (52, 22) zugeordnet sind.

6. Druckleitung nach Anspruch 5, dadurch gekennzeichnet, daß die Verbindungsmittel der beiden Stützelemente (5, 5') mit der Bodenplatte (2) eine Mehrzahl quer vorgespannter Seile (8) umfassen, die durch ausgerichtete Schutzhüllen (81) verlaufen, welche beim Gießen innen in den Stützelementen (5) und der Bodenplatte (2) gemäß einem zu dem der entsprechenden Teile des Gebildes im wesentlichen parallel verlaufenden Profil angeordnet sind, wobei sich diese vorgespannten Seile (8), nach deren Vorspannung, auf Auflageflächen abstützen, die beim Gießen am Ausgang dieser Schutzhüllen auf dem Stützelement angeordnet werden.

7. Druckleitung nach Anspruch 5, dadurch gekennzeichnet, daß die Verbindungsmittel (6) der Stützelemente (5, 5') mit der Bodenplatte (2) eine Mehrzahl von Stäben (6) umfassen, welche quer zu den komplementären aufeinanderliegenden Teilen (52a, 22a) dieser Seitenflächen verlaufen und über die Länge eines jeden Elementes (5) verteilt sind, wobei jeder Stab (6) mit einem Ende (63) auf dem Stützelement (5) und mit dem anderen Ende (61) auf der Bodenplatte (2) oder umgekehrt zur Abstützung kommt.

8. Druckleitung nach Anspruch 7, dadurch gekennzeichnet, daß jeder Verbindungsstab (6) in jedem Stützelement (5) und in der Bodenplatte (2) angeordnete ausgerichtete Öffnungen durchdringt und ein in der Bodenplatte (2) verankertes innenende (61) und ein auf dem Stützelement (5) aufliegendes Kopfende (63) oder umgekehrt umfaßt.

9. Druckleitung nach Anspruch 8, dadurch gekennzeichnet, daß die Verbindungsstäbe (6) von der Außenseite her angeordnet sind und jeder mit seinem Kopfende (63) auf der seitlichen Außenfläche (50) des Stützelementes (5) abgestützt ist.

10. Druckleitung nach einem der Ansprüche 4 bis 9, dadurch gekennzeichnet, daß die komplementären Seitenflächen (52) (22) jedes Stützelements (5, 5') und der Bodenplatte (2) entlang dieser komplementären Seitenflächen (52) (22) ein Stufenprofil mit ineinandergreifenden vorspringenden bzw. rückspringenden Teilen aufweisen.

11. Druckleitung nach Anspruch 10, dadurch gekennzeichnet, daß die komplementären Seitenflächen (52) der Stützelemente (5) und (22) der Bodenplatte (2) in ihrem Mittelteil ein Auflageteil (52a) (22a) aufweisen, das einen Winkel von weniger als 45° mit der Horizontalen bildet.

12. Druckleitung nach einem der Ansprüche 10 und 11, dadurch gekennzeichnet, daß die seitliche Innenfläche (52) jedes Stützelements (5) an der Basis eine vorspringende Unterkante (54) aufweist, welche unter eine entsprechende am Oberteil der entsprechenden Seitenfläche (22) der Bodenplatte (2) befindliche Kante (25) greift.

13. Druckleitung nach Anspruch 12, dadurch gekennzeichnet, daß die Bodenplatte (2) eine Stärke aufweist, die kleiner als der Abstand zwischen dem Unterteil (11) der Wand (1) und dem Boden (B) ist, und mit ihren Oberkanten (25) auf den beiden sie umgebenden Stützelementen (5, 5') zur Auflage kommt.

14. Druckleitung nach einem der Ansprüche 10 bis 13, dadurch gekennzeichnet, daß die Verbindungsstäbe (6) von innen in dem Gebilde (1) eingebaut sind und die aufeinanderliegenden Teile (52a, 22a) durchqueren, wobei jeder Stab (6) mit seinem Kopfende (63) auf der Oberfläche (23) der Bodenplatte (2) zur Auflage kommt.

15. Druckleitung nach Anspruch 14, dadurch gekennzeichnet, daß die Verbindungsstäbe (6) so lang sind, daß sie sich in die in der darunterliegenden Erde gefertigten Bohrungen hineinerstrecken und in dieser verankert sind.

16. Druckleitung nach einem der vorangehenden Ansprüche, dadurch gekennzeichnet, daß der untere Rand (31) jedes dünnwandigen Seitensegments (3) und die entsprechenden Seitenränder (11') des auf der Bodenplatte (2) aufliegenden unteren Segmentes (11) in einer gewissen Entfernung von der Fugenebene (Q) zwischen dem Stützelement (5) und der Bodenplatte (2) unter Ausbildung einer Aussparung beiderseits dieser Ebene (Q) im Abstand angeordnet sind, wobei die Aussparung durch eine Fugenabdeckung (7) verschlossen ist, welche zwecks Herstellens einer durchgehenden Innenfläche des Gebildes mit dem Seitensegment (3) und dem unteren Segment (11) nach dem Einbau verschweißt wird.

17. Druckleitung nach Anspruch 16, dadurch gekennzeichnet, daß die einander gegenüberliegenden Enden (31) jedes Seitensegments (3) und (11') des unteren Segmentes (11) gerippte Teile (36, 16) zur Begrenzung der Aussparung, in welcher die Fugenabdeckung (7) eingesetzt ist, aufweisen.

18. Druckleitung nach einem der vorangehenden Ansprüche, dadurch gekennzeichnet, daß das obere das Gebilde nach oben abschließende dünnwandige Segment (4) eine Breite aufweist, die größer ist als der Abstand zwischen den oberen Enden (32, 32') der Seitensegmente (3, 3') zwecks Abdeckung derselben über eine gewisse Distanz, wobei auf der Innen- und auf derAußenfläche der dünnen Wand jeweils entlang den Enden des Seitensegmentes (3) bzw. des oberen Segmentes (4) nach dem Einbau zwei Schweißnähte (74, 75) ausgeführt werden.

19. Verfahren zum Bau einer Mediumtransportleitung, welche auf einer planierten und gestampften Fläche (B) steht und aus einem rohrförmigen, durch eine dünne Wand begrenzten Gebilde besteht, das auf einer starren Bodenplatte aus Formstoff befestigt ist, dadurch gekennzeichnet,
daß gekrümmte dünnwandige Elemente formgerecht zugeschnitten werden, die jeweils mindestens vier Segmente der Peripherie des rohrförmigen Gebildes (1), je zwei Seitensegmente (3), ein unteres Segment (11) und ein oberes Segment (4), abdecken,
daß vorab in gewünschter Anzahl zwei Typen vorgefertigter Elemente aus Stahlbeton mit jeweils einem dünnwandigen Segment auf einer Fläche, das eine in dem Beton verankerte verlorene Schalung bildet, hergestellt werden, und zwar Elemente der Bodenplatte (2) aus Stahlbeton, die mit einem unteren Segment (11) bedeckt sind, und Stützelemente (5) mit einer mit einem Seitensegment (3) bedeckten gekrümmten Fläche,
daß, nach Anlieferung dieser vorgefertigten Elemente in der gewünschten Anzahl auf der Baustelle zur Errichtung eines neuen Leitungsabschnittes im Anschluß an einen bereits gefertigten Teil, auf der Baufläche (B) ein Plattenelement (2) und zwei Stützelemente (5, 5') errichtet werden, die auf die entsprechenden Elemente des bereits gefertigten Teils ausgerichtet werden, wobei die einander gegenüber liegenden Seitenflächen der Stützelemente (5) und der Bodenplatte (2) aufeinander gesetzt werden,
daß einerseits zwischen den Segmenten (11, 3, 3') des soeben errichteten Abschnittes entlang der unteren (31, 31') bzw. der oberen (32, 32') Ränder und andererseits in der querverlaufenden Verbindungsebene (P) zwischen jedem Segment (3, 11) des neuen Abschnittes und den entsprechenden Segmenten (3a, 11a) des bereits errichteten Teils, entlang deren aneinanderstoßenden Seiten Schweißnähte ausgeführt werden,
daß das obere Segment der Wand (4) auf die oberen Ränder (32, 32') der Seitensegmente (3, 3') aufgesetzt wird, und dieses obere Segment (4) in Längsrichtung mit den Seitensegmenten (3, 3') und in Querrichtung mit dem oberen Segment des bereits errichteten Teils zusammengeschweißt wird.

20. Verfahren nach Anspruch 19, dadurch gekennzeichnet, daß die beiden Stützelemente (5, 5') zuerst auf der Baufläche beiderseits der Längsachse der Leitung angeordnet und auf die entsprechenden Elemente des bereits errichteten Teils ausgerichtet werden, und daß dann das Element der Bodenplatte (2) zwischen diesen beiden Stützelementen (5, 5') eingesetzt wird.

21. Verfahren zum Bau einer Mediumtransportleitung, welche auf einer planierten und gestampften Fläche (B) steht, und aus einem rohrförmigen durch eine dünne Wand begrenzten Gebilde besteht, das auf einer starren Bodenplatte aus Formstoff befestigt ist, dadurch gekennzeichnet,
daß gekrümmte dünnwandige Elemente formgerecht zugeschnitten werden, die jeweils mindestens vier Segmente der Peripherie des rohrförmigen Gebildes (1), je zwei Seitensegmente (3), ein unteres Segment (11) und ein oberes Segment (4), abdecken,
daß vorab in gewünschter Anzahl vorgefertigte Stützelemente (5, 5') aus Stahlbeton mit je einer gekrümmten Fläche hergestellt werden, auf welcher ein dünnwandiges eine verlorene Schalung bildendes Seitensegment (3) angeordnet und verankert ist,
daß nach Anlieferung dieser vorgefertigten Elemente in der gewünschten Anzahl auf der Baustelle zur Errichtung eines neuen Leitungsabschnittes im Anschlußan ein bereits gefertigtes Teil, zwei Stützelemente (5, 5') auf die Baufläche (B) gesetzt und auf die entsprechenden Elemente des bereits gefertigten Teils ausgerichtet werden,
daß, nach Anordnung und Ausrichtung der Stützelemente (5, 5') über eine gewisse Distanz eine entsprechende Länge der Bodenplatte (2) zwischen den Seitenflächen (52, 52') der Stützelemente (5, 5') gegossen wird und eine gewünschte Anzahl dünnwandiger unterer Segmente (11) auf dieser Bodenplatte (2) verankert werden,
daß einerseits zwischen den Segmenten (11, 3, 3') des soeben errichteten Abschnittes, entlang der unteren (31, 31') bzw. der oberen (32, 32') Seiten, und anderseits in der querverlaufenden Verbindungsebene (P) zwischen jedem Segment (3, 11) des neuen Abschnittes und den entsprechenden Segmenten (3a, 11a) des bereits errichteten Teils, entlang deren aneinanderstoßenden Seiten Schweißnähte ausgeführt werden,
daß das obere Segment der Wand (4) auf die oberen Enden (32, 32') der Seitensegmente (3, 3') aufgesetzt wird und dieses obere Segment (4) in Längsrichtung mit den Seitensegmenten (3, 3') und in Querrichtung mit dem oberen Segment des bereits errichteten Teils zusammengeschweißt wird.

22. Verfahren nach einem der Ansprüche 19 bis 21, dadurch gekennzeichnet, daß bei Erdrutschgefahr zuerst das obere Segment (4) auf die Ränder (32, 32') der Seitensegmente (3, 3') aufgesetzt wird und dann die gesamten Schweißnähte innen in dem so geschlossenen Gebilde (1) gefertigt werden.

## Claims

1. Conduit for the circulation of fluid under internal pressure comprising, generally, a tubular enclosure (1) limited by a thin wall (1) and fixed on a rigid base slab (2) in moulded material, said enclosure (1) being made of a plurality of juxtaposed panels mounted along their adjacent sides, and comprising, in cross-section, a lower part (11) applied and fixed to the rigid slab (2) and an upper part (12) curved in a vault shape which is connected to the lower part (11) along two lateral sides (31, 31') provided for the fixing on the slab, said slab comprising an upper surface (23), a lower surface (21) and two lateral surfaces (22, 22'),
characterised in that the upper part (12) of the enclosure (1) comprises in cross-section, at least three thin wall segments, respectively two lateral segments (3, 3') each extending between a lower side (31) and an upper side (32) and at least one upper segment (4) closing the enclosure (1) and connected to the upper sides (32, 32') of lateral segments (3, 3') and in that each thin wall lateral segment (3, 3') is joined to a rigid support element (5, 5') in moulded material fixed at its base on the corresponding side of slab (2) and rising to the top of each support element (5, 5') comprising an inner surface (51, 51') facing the enclosure (1) having a profile conjugate with that of the material segment and on which the latter is applied, said inner surface (51, 51') extending from the level of the upper surface (23) of slab (2) until a level (H2) of sufficient height to maintain the rigidity of said lateral segment over its entire height (HI) without risk of collapse even under the weight of upper segment (4) and in the absence of internal pressure.

2. Conduit under pressure according to claim 1, characterized in that the thickness of the thin wall (1) is determined in relation to the ability of the latter simply to withstand tensile forces generated by the application of internal pressure, and in that height (HI) of upper sides (32, 32') of lateral segments (3, 3') is determined such as upper segment (4) extending between said upper sides may be made of a single panel sufficiently rigid to avoid the risk of collapsing under its own weight mounted on lateral segments (3, 3').

3. Conduit under pressure according to one of claims 1 and 2 characterized in that both support elements (5, 5') are laid on the ground either side of slab (2) each by means of a base with a plane lower surface (53).

4. Conduit under pressure according to one of claims 1 to 3, characterized in that each support element (5, 5') is limited, below the level of the upper surface (23) of slab (2) and on the side of the latter by an inner lateral surface (52) of which at least a part (52a) is applied against at least one corresponding part of the opposite lateral surface (22) of slab (2), said lateral surfaces (22) of the slab and (52) of support elements (5) having conjugate profiles.

5. Conduit under pressure according to claim 4, characterized in that each support element (5, 5') is combined with means (6, 8) for joining support elements (5, 5') to slab (2) by applying one to another at least corresponding parts (52a, 22a) of conjugated lateral surfaces (52, 22).

6. Conduit under pressure according to claim 5, characterized in that the means of joining the two support elements (5, 5') to slab (2) are made of a plurality of transverse prestress cables (8) passing through aligned sheaths (81) provided inside support elements (5) and slab (2) during casting and following a profile substantially parallel to that of the corresponding parts of the enclosure, said prestress cables (8) bearing, after tightening, on bearing surfaces (57') provided on the support element during casting at the exit of said sheaths (81).

7. Conduit under pressure according to claims 5, characterized in that the means (6) for joining support elements (5, 5') to slab (2) are made of a plurality of pins (6) extending transversely to the conjugate application parts (52a, 22a) of said lateral surfaces and distributed over the length of each element (5), each pin (6) bearing at one end (63) on support element (5) and at the other end (61) on slab (2), or inversely.

8. Conduit under pressure according to claim 7, characterized in that each interlocking pin (6) passes through aligned openings provided in support element (5) and slab (2) and comprises an inner end (61) embedded in slab (2) and a bearing head (63) on support element (5) or inversely.

9. Conduit under pressure according to claim 8, characterized in that linking pins (6) are positioned from the outside each being supported by its head (63) on the outer lateral surfaces (50) of support element (5).

10. Conduit under pressure according to one of claims 4 to 9, characterized in that the conjugate lateral surfaces (52) (22) of each support element (5, 5') and slab (2) have a staggered profile providing, along said conjugate lateral surfaces (52) (22), respectively projecting and recessed parts which nest one another.

11. Conduit under pressure according to claim 10, characterized in that conjugate lateral surfaces (52) of support elements (5) and (22) of slab (2) comprise, in their central part, an application part (52a) (22a) forming an angle of less than 45° with the horizontal.

12. Conduit under pressure according to one of claims 10 and 11, characterized in that the internal surface (52) of each support element (5) comprises, at its base, a lower projecting rim (54) which engages below a corresponding rim (25) provided in the upper part of the corresponding lateral surface (22) of slab (2).

13. Conduit under pressure according to claim 12, characterized in that slab (2) has a thickness of less than the distance between the lower part (11) of wall (1) and ground (B) and is supported by its upper rims (25), on two surrounding support elements (5, 5').

14. Conduit under pressure according to one of claims 10 to 13, characterized in that the linking pins (6) are provided within the inside of the enclosure (1) and pass through the application parts (52a, 22a), each pin (6) bearing by its head (63) on the upper surface (23) of slab (2).

15. Conduit under pressure according to claim 14, characterized in that linking pins (6) are extended so that they reach the bore-holes provided in the underlying ground and are embedded in it.

16. Conduit under pressure according to one of the preceding claims, characterized in that the lower edge (31) of each lateral thin wall segment (3) and the corresponding lateral edges (11') of the lower segment (11) applied to slab (2) are separated over a certain distance from joint plane (Q) between the support element (5) and slab (2) leaving, either side of said joint plane (Q), a slot covered by a joint-cover (7) which is welded, after mounting, to lateral segment (3) and lower segment (11) in such manner as to restore the continuity of the inner surface of the enclosure.

17. Conduit under pressure according to claim 16, characterized in that the end (31) opposite each lateral segment (3) and (11') of lower segment (11) are provided with slanted parts (36, 16) limiting the slot in which the joint-cover is placed (7).

18. Conduit under pressure according to one of the preceding claims, characterized in that the upper thin wall segment (4) closing the enclosure at the top is greater width than the distance between the upper ends (32, 32') of lateral segments (3, 3'), so that it overlaps the latter over a certain distance, two ribbons of welding (74, 75) being made after assembly on both surfaces respectively inner and outer of thin wall along the ends, respectively, of each lateral segment (3)and upper segment (4).

19. Method of construction of a conduit for the transport of fluid laid on a levelled, compressed surface (B) made of a tubular enclosure limited by a thin wall and fixed on a rigid base slab in moulded material characterized by the steps of:
- cutting and shaping thin wall curved components covering respectively at least four segments of the circumference of the tubular enclosure (1), respectively two lateral segments (3), a lower segment (11) and an upper segments (4),
- making in advance and in required numbers two types of prefabricated elements in reinforced concrete each provided on one surface with a thin wall segment constituting a disposable formwork embedded in the concrete, respectively slab elements (2) in reinforced concrete covered by a lower segment (11), and support elements (5) having a curved surface covered by a lateral segment (3),
- these prefabricated elements having been delivered on-site in required numbers to construct a new length of conduit to continue the part already laid, placing on the laying surface (B) a slab element (2) and two support elements (5, 5') aligning them with the corresponding elements of the part already laid and applying one to another the facing lateral surfaces of support elements (5) and slab (2),
- welding on one hand between segments (11, 3, 3') of the length that has already been laid, along the lower (31, 31') and upper (32, 32') sides and, in the other hand in the transverse junction plane (P) between each segment (3, 11) of the new length of conduit and the corresponding segments (3a, 11a) of the part already laid along their adjacent sides;
- laying the upper wall segment (4) on upper ends (32, 32') of lateral segments (3, 3') and welding said upper segment (4) longitudinally to lateral segments (3, 3') and transversely with the upper segment of the part already laid.

20. Method according to claim 19, characterized in that both support elements (5 5') are placed firstly on the laying surface either side of the longitudinal axis of the conduit and aligned with the corresponding elements of the part already laid, then the slab element (2) is placed between said support elements (5, 5').

21. Method of construction of a conduit for the transport of fluid laid on a levelled, compressed surface (B) comprising a tubular enclosure limited by a thin wall and fixed on a rigid base slab in moulded material, characterized by the steps of:
- cutting and shaping thin wall curved components covering respectively at least four segments of the circumference of the tubular enclosure (1), respectively two lateral segments (3), a lower segment (11) and an upper segment (4),
- making in advance and in required numbers support elements (5 5') prefabricated in reinforced concrete each having a curved surface on which is applied and embedded a lateral thin wall segment (3) constituting a disposable formwork,
- these prefabricated elements having been delivered in required number on-site to construct a new length of conduit to continue the part already laid, placing on the laying surface (B) support elements (5, 5') aligning them with the corresponding elements of the part already laid,
- support elements (5, 5') thus being laid and aligned over a certain distance, casting a corresponding length of slab (2) between the lateral surfaces (52, 52') of support elements (5, 5') and embedding on said slab (2) a required number of lower thin wall segments (11),
- welding on one hand between segments (11, 3, 3') of the length of conduit just laid, along the lower (31, 31') and upper (32, 32') sides and, in the other hand in the transverse junction plane (P), between each segment (3, 11) of the new length and the corresponding segments (3A, 11a) of the part already laid along their adjacent sides,
- laying the upper segment of wall (4) on the upper ends (32, 32') of lateral segments (3, 3') and welding said upper segment (4) longitudinally to lateral segments (3, 3') and transversaly to the upper segment of the part already laid.

22. Method according to one of claims 19 to 21, characterized in that in the event of landslide risks the upper segment (4) is first mounted on ends (32, 32') of lateral segments (3, 3'), then all welding operations are made inside the enclosure (1) thus closed.
